# EUROPEAN PATENT APPLICATION

(11) **EP 4 723 362 A1**
(43) Date of publication of application: **08.04.2026**
(21) Application number: 25754603.6
(22) Date of filing: 11.02.2025
(51) Int. Cl.: H01M 50/595, B65H 35/00

(54) **TAPE ATTACHING APPARATUS**

(30) Priority: 15.02.2024 KR 20240021738
(71) Applicant: LG Energy Solution, Ltd., Seoul 07335 (KR)
(72) Inventor: JANG, Ji Won, Daejeon 34122 (KR)
(74) Representative: Goddar, Heinz J.
(86) International application number: PCT/KR2025/001951
(87) International publication number: WO 2025/174016

(57) **Abstract**

The technical idea of the present disclosure provides a tape attaching apparatus. The tape attaching apparatus is configured to attach a first tape to a first side of a workpiece and a second tape to a second side of the workpiece. The tape attaching apparatus includes a tape holder including a first holder supporting the first tape and a second holder supporting the second tape, each configured to attach a center part of the first tape and a center part of the second tape to the workpiece and to attach a peripheral part of the first tape to a peripheral part of the second tape, wherein the tape holder includes a first holder supporting the first tape and a second holder supporting the second tape.

## Description

### [Technical Field]

The present disclosure relates to a tape attaching apparatus.

This application claims the benefit of Korean Patent Application No. 10-2024-0021738, filed on February 15, 2024, the disclosure of which is incorporated herein by reference.

### [Background]

With the technological development and increasing demand for mobile devices, the demand for secondary batteries is also increasing rapidly. Among them, lithium secondary batteries are widely used as an energy source for various mobile devices and other electronic products due to their high energy density and operating voltage, as well as their excellent preservation and lifetime characteristics. In recent years, the demand for higher-capacity secondary batteries has been growing rapidly as the applications of secondary batteries have expanded. In order to improve the safety of these secondary batteries, taping is used to attach protective tapes to the secondary batteries.

### [Summary]

### [Technical Problem]

The technical challenge of the present disclosure is to provide a tape attaching apparatus.

### [Technical Solution]

To solve the above-mentioned problems, the technical idea of the present disclosure provides a tape attaching apparatus configured to attach a first tape to a first side of a workpiece and a second tape to a second side of the workpiece, including: a tape holder including a first holder supporting the first tape and a second holder supporting the second tape, the tape holder configured to attach a center part of the first tape and a center part of the second tape to the workpiece and to attach an outer peripheral part of the first tape to an outer peripheral part of the second tape, wherein the first holder includes a center part supporting the center part of the first tape and an peripheral part supporting the peripheral part of the first tape, wherein the second holder includes a center part supporting the center part of the second tape and an peripheral part supporting the peripheral part of the second tape, wherein a support surface of the peripheral part of the first holder includes a portion protruding from a support surface of the center part of the first holder.

In exemplary embodiments, the support surface of the center part of the first holder has a greater flatness than the support surface of the peripheral part of the first holder.

In exemplary embodiments, a support surface of the peripheral part of the second holder includes a portion protruding from a support surface of the center part of the second holder.

In exemplary embodiments, the support surface of the center part of the second holder has a greater flatness than the support surface of the peripheral part of the second holder.

In exemplary embodiments, the support surface of the peripheral part of the first holder includes a plurality of first protruding parts, and the support surface of the peripheral part of the second holder includes a plurality of second protruding parts.

In exemplary embodiments, the plurality of first protruding parts is not aligned with the plurality of second protruding parts in a vertical direction.

In exemplary embodiments, the support surface of the peripheral part of the first holder includes a plurality of first protruding parts, a support surface of the peripheral part of the second holder includes a plurality of grooves, and each of the plurality of first protruding parts is aligned with a corresponding groove among the plurality of grooves in a vertical direction.

In exemplary embodiments, the peripheral part of the first holder includes a first foam pad in contact with the first tape.

In exemplary embodiments, the peripheral part of the second holder includes a second foam pad in contact with the second tape.

In exemplary embodiments, at least one among the peripheral part of the first holder and the peripheral part of the second holder includes a heater.

To solve the above-mentioned problems, the technical idea of the present disclosure provides a tape attaching apparatus configured to attach a first tape to a first side of a workpiece and a second tape to a second side of the workpiece, including: a tape holder including a first holder supporting the first tape and a second holder supporting the second tape, the tape holder configured to attach a center part of the first tape and a center part of the second tape to the workpiece and to attach a peripheral part of the first tape to a peripheral part of the second tape, wherein the first holder includes a first center block supporting the center part of the first tape and a first peripheral block supporting the peripheral part of the first tape, and the first center block and the first peripheral block are configured to move independently.

In exemplary embodiments, the tape attaching apparatus further includes a first pressing device configured to press the first peripheral block toward the second holder.

In exemplary embodiments, the first peripheral block includes a first heater.

In exemplary embodiments, the second holder includes a second center block supporting the center part of the second tape and a second peripheral block supporting the peripheral part of the second tape, and the second center block and the second peripheral block are configured to move independently.

In exemplary embodiments, the first peripheral block includes a first heater, and the second peripheral block includes a second heater.

### [Advantageous Effects]

According to exemplary embodiments of the present disclosure, the adhesive pressure between the first tape and the second tape can be strengthened in the section where the first tape and the second tape are directly adhered.

According to exemplary embodiments of the present disclosure, the workpiece may be a joint between an electrode tab and an electrode lead of a battery cell joined by welding, and the first tape and the second tape may be attached to the joint between the electrode tab and the electrode lead of the battery cell, and may be configured to protect the joint between the electrode tab and the electrode lead of the battery cell. As the adhesion between the first tape and the second tape is strengthened, damage to the battery cell due to poor adhesion between the first tape and the second tape may be prevented, and ultimately the reliability of the battery cell may be improved.

The effects that may be obtained from the exemplary embodiments of the present disclosure are not limited to those mentioned above, and other effects not mentioned may be clearly derived and understood by one of ordinary skill in the art to which the exemplary embodiments of the present disclosure belong from the following description. That is, unintended effects of practicing the exemplary embodiments of the present disclosure may also be derived from the exemplary embodiments of the present disclosure by one of ordinary skill in the art.

### [Brief Description of the Drawings]

FIGS. 1a and 1b are cross-sectional views illustrating a tape attaching apparatus according to exemplary embodiments of the present disclosure.
FIGS. 2a and 2b are cross-sectional views illustrating a tape attaching apparatus according to exemplary embodiments of the present disclosure.
FIGS. 3a and 3b are cross-sectional views illustrating a tape attaching apparatus according to exemplary embodiments of the present disclosure.
FIGS. 4a and 4b are cross-sectional views illustrating a tape attaching apparatus according to exemplary embodiments of the present disclosure.
FIGS. 5a and 5b are cross-sectional views illustrating a tape attaching apparatus according to exemplary embodiments of the present disclosure.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First embodiment)

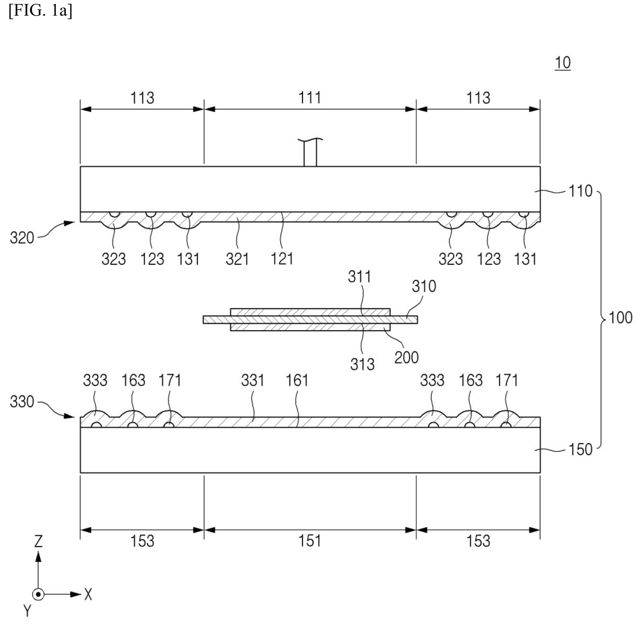

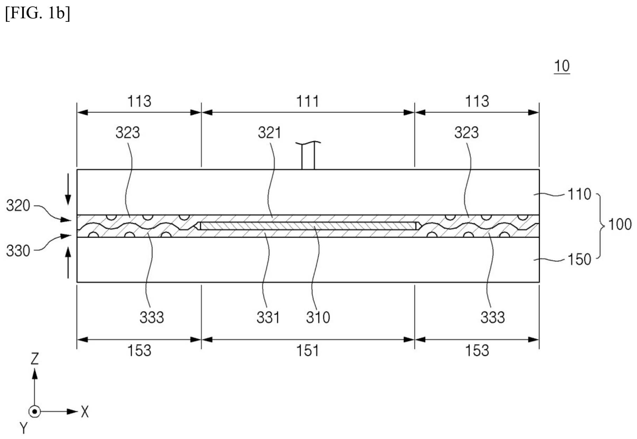

FIGS. 1a and 1b are cross-sectional views illustrating a tape attaching apparatus 10 according to exemplary embodiments of the present disclosure.

Referring to FIGS. 1a and 1b, the tape attaching apparatus 10 may include a tape holder 100 configured to support the tape and attach the tape to a workpiece 310, and a stage 200 supporting the workpiece 310.

The tape holder 100 may attach a first tape 320 to a first side 311 of the workpiece 310 and a second tape 330 to a second side 313 of the workpiece 310. The first side 311 and the second side 313 of the workpiece 310 may be opposite each other. A length along a horizontal direction (e.g., X direction) of the first tape 320 may be greater than a length along a horizontal direction (e.g., X direction) of the workpiece 310, and the first tape 320 may include a center part 321 that is attached to the first side 311 of the workpiece 310 and a peripheral part 323 that is not attached to the workpiece 310. The first tape 320 may include a pair of peripheral parts 323 spaced apart in a horizontal direction (e.g., X direction) with the center part 321 in between. A length along the horizontal direction (e.g., X direction) of the second tape 330 may be greater than a length along the horizontal direction (e.g., X direction) of the workpiece 310, and the second tape 330 may include a center part 331 that is attached to a second side 313 of the workpiece 310 and a peripheral part 333 that is not attached to the workpiece 310. The second tape 330 may include a pair of peripheral parts 333 spaced apart in a horizontal direction (e.g., an X direction) with the center part 331 in between. The tape holder 100 may attach the center part 321 of the first tape 320 and the center part 331 of the second tape 330 to the workpiece 310, respectively, and may attach the peripheral part 323 of the first tape 320 to the peripheral part 333 of the second tape 330.

The tape holder 100 may include a first holder 110 supporting a first tape 320 and a second holder 150 supporting a second tape 330. The first holder 110 may be disposed above the workpiece 310, and the second holder 150 may be disposed below the workpiece 310. The first holder 110 may be referred to as the upper holder, and the second holder 150 may be referred to as the lower holder. The first holder 110 and the second holder 150 may be aligned in a vertical direction (e.g., Z direction) and may be spaced apart in a vertical direction (e.g., Z direction) with the workpiece 310 mounted on the stage 200 in between.

At least one among the first holder 110 and the second holder 150 may be configured to move in a vertical direction (e.g., Z direction). The movement of the first holder 110 in the vertical direction (e.g., Z direction) and/or the movement of the second holder 150 in the vertical direction (e.g., Z direction) may be controlled by a lifting actuator. By the movement of the first holder 110 in the vertical direction (e.g., Z direction) and/or the movement of the second holder 150 in the vertical direction (e.g., Z direction), the distance between the first holder 110 and the second holder 150 may be adjusted.

The first holder 110 may be configured to adsorb and support the first tape 320. The first tape 320 may have an adhesive side and a non-adhesive side opposite each other, and the support surface of the first holder 110 may support the non-adhesive side of the first tape 320. The first holder 110 may include a plurality of suction holes extending from the support surface supporting the non-adhesive side of the first tape 320. A vacuum pump connected to the first holder 110 may depressurize the plurality of suction holes in the first holder 110 to allow the first tape 320 to adhere to the support surface of the first holder 110. The vacuum pump connected to the first holder 110 may release the vacuum evacuation of the plurality of suction holes of the first holder 110, thereby breaking the vacuum adsorption to the first tape 320.

The second holder 150 may be configured to adsorb and support the second tape 330. The second tape 330 may have an adhesive side and a non-adhesive side opposite each other, and the support surface of the second holder 150 may support the non-adhesive side of the second tape 330. The second holder 150 may include a plurality of suction holes extending from the support surface supporting the non-adhesive side of the second tape 330. A vacuum pump connected to the second holder 150 may depressurize the plurality of suction holes in the second holder 150 to allow the second tape 330 to adhere to the support surface of the second holder 150. The vacuum pump connected to the second holder 150 may release the vacuum evacuation of the plurality of suction holes of the second holder 150, thereby breaking the vacuum adsorption to the second tape 330.

The first holder 110 may include a center part 111 that supports a center part 321 of the first tape 320 and a peripheral part 113 that supports a peripheral part 323 of the first tape 320. The first holder 110 may include a pair of peripheral parts 113 spaced apart in a horizontal direction (e.g., X direction) across the center part 111. The center part 111 and the peripheral part 113 of the first holder 110 may be referred to as a first center block and a first peripheral block, respectively.

The support surface 123 of the peripheral part 113 of the first holder 110 may include a portion that protrudes from the support surface 121 of the center part 111 of the first holder 110. In exemplary embodiments, the support surface 121 of the center part 111 of the first holder 110 is a flat surface, and the support surface 123 of the peripheral part 113 of the first holder 110 may include a non-flat surface. In exemplary embodiments, the flatness of the support surface 121 of the center part 111 of the first holder 110 may be greater than the flatness of the support surface 123 of the peripheral part 113 of the first holder 110. In exemplary embodiments, the support surface 123 of the peripheral part 113 of the first holder 110 may have a step at the boundary with the support surface 121 of the center part 111 of the first holder 110.

The second holder 150 may include a center part 151 supporting a center part 331 of the second tape 330 and a peripheral part 153 supporting a peripheral part 333 of the second tape 330. The second holder 150 may include a pair of peripheral parts 153 spaced apart in a horizontal direction (e.g., X direction) across the center part 151. The center part 151 and the peripheral part 153 of the second holder 150 may be referred to as a second center block and a second peripheral block, respectively.

The support surface 163 of the peripheral part 153 of the second holder 150 may include a portion that protrudes from the support surface 161 of the center part 151 of the second holder 150. In exemplary embodiments, the support surface 161 of the center part 151 of the second holder 150 is a flat surface, and the support surface 163 of the peripheral part 153 of the second holder 150 may include a non-flat surface. In exemplary embodiments, the flatness of the support surface 161 of the center part 151 of the second holder 150 may be greater than the flatness of the support surface 163 of the peripheral part 153 of the second holder 150. In exemplary embodiments, the support surface 163 of the peripheral part 153 of the second holder 150 may have a step at the boundary with the support surface 161 of the center part 151 of the second holder 150.

In exemplary embodiments, the support surface 123 of the peripheral part 113 of the first holder 110 may include a plurality of first protruding parts 131 and may have an overall uneven structure. In exemplary embodiments, the support surface 163 of the peripheral part 153 of the second holder 150 may include a plurality of second protruding parts 171 and may have an uneven structure throughout. In exemplary embodiments, the plurality of second protruding parts 171 may be disposed such that they are not aligned with the plurality of first protruding parts 131 in a vertical direction (e.g., Z direction). For example, the plurality of first protruding parts 131 may be offset from the plurality of second protruding parts 171 in a horizontal direction (e.g., X direction and/or Y direction).

Hereinafter, with reference to FIGS. 1a and 1b, an exemplary tape attachment method using the tape attaching apparatus 10 will be described.

Referring to FIG. 1a, the first holder 110 adsorbs and supports the non-adhesive side of the first tape 320 and the second holder 150 adsorbs and supports the non-adhesive side of the second tape 330.

Supporting the first tape 320 by vacuum adsorption with the first holder 110 may include gripping the first tape fabric provided by the first tape supply part with a first tape extractor, moving the first tape fabric with the first tape extractor so that the first tape fabric is positioned beneath the first holder 110, applying vacuum pressure to a suction hole in the first holder 110 to adsorb the first tape fabric onto a support surface of the first holder 110, and cutting a portion of the first tape fabric between the first holder 110 and the first tape supply part with a first cutter.

Supporting the second tape 330 by vacuum adsorption with the second holder 150 may include gripping the second tape fabric provided from the second tape supply part with a second tape extractor, moving the second tape fabric with the second tape extractor so that the second tape fabric is positioned over the second holder 150, applying vacuum pressure to a suction hole in the second holder 150 to adsorb the second tape fabric onto a support surface of the second holder 150, and cutting a portion of the second tape fabric between the second holder 150 and the second tape supply part with a second cutter.

Referring to FIG. 1b, the first holder 110 is lowered so that the first tape 320 contacts the workpiece 310 mounted on the stage 200, and the second holder 150 is raised so that the second tape 330 contacts the workpiece 310 mounted on the stage 200. The tape holder 100 attaches the center part 321 of the first tape 320 and the center part 331 of the second tape 330 to the workpiece 310, and the peripheral part 323 of the first tape 320 to the peripheral part 333 of the second tape 330, such that a suitable adhesive pressure is formed between the first holder 110 and the second holder 150.

According to the tape attaching apparatus according to a comparative example, the support surface of the upper holder and the support surface of the lower holder may each be generally flat. In this case, in a tape attachment process in which two tapes (i.e., an upper tape and a lower tape) are each attached to a workpiece, the adhesion between the two tapes may be unstable due to insufficient adhesive pressure formed between the upper holder and the lower holder in the section where the two tapes are directly adhered.

According to exemplary embodiments of the present disclosure, the support surface 123 of the peripheral part 113 of the first holder 110 and/or the support surface 163 of the peripheral part 153 of the second holder 150 has a protruding part, so that the adhesive pressure between the first tape 320 and the workpiece 310 and the second tape 330 and the workpiece 310 can be strengthened in the section where the first tape 320 and the second tape 330 are directly adhered, without changing the adhesive pressure between the first tape 320 and the second tape 330. Thus, since the adhesion between the first tape 320 and the second tape 330 is strengthened, the breaking of the adhesion between the first tape 320 and the second tape 330 can be inhibited.

In exemplary embodiments, the plurality of first protruding parts 131 of the support surface 123 of the peripheral part 113 of the first holder 110 and the plurality of second protruding parts 171 of the support surface 163 of the peripheral part 153 of the second holder 150 may be misaligned in a vertical direction (e.g., Z direction). In this case, the adhesive pressure between the peripheral part 323 of the first tape 320 and the peripheral part 333 of the second tape 330 may be enhanced during the tape attachment process, thereby strengthening the adhesion between the first tape 320 and the second tape 330.

In exemplary embodiments, at least one among the peripheral part 113 of the first holder 110 and the peripheral part 153 of the second holder 150 may include a heater configured to apply heat to enhance the adhesive pressure between the peripheral part 323 of the first tape 320 and the peripheral part 333 of the second tape 330.

In exemplary embodiments, the workpiece 310 may be a joint between an electrode tab and an electrode lead of a battery cell joined by welding. The first tape 320 and the second tape 330 may be attached to the junction between the electrode tabs and the electrode leads of the battery cell, and may be configured to protect the junction between the electrode tabs and the electrode leads of the battery cell. According to exemplary embodiments of the present disclosure, the enhanced adhesion between the first tape 320 and the second tape 330 may prevent damage to the battery cell due to poor adhesion between the first tape 320 and the second tape 330, which may ultimately improve the reliability of the battery cell.

### (Second embodiment)

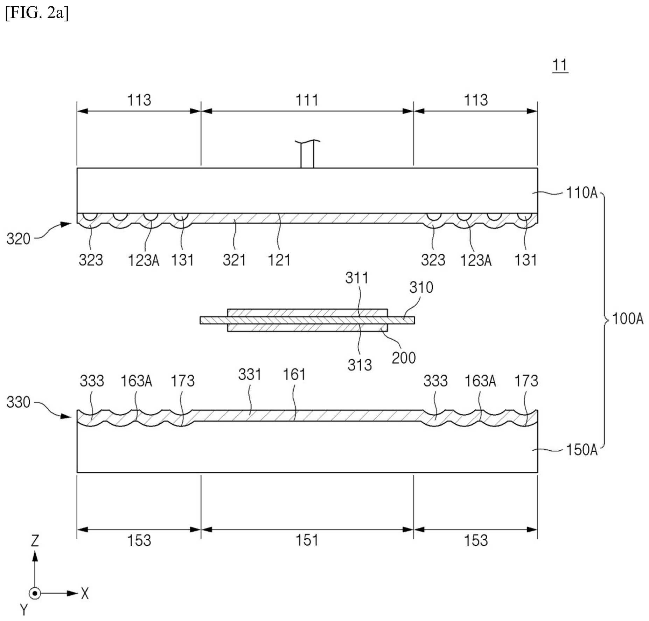

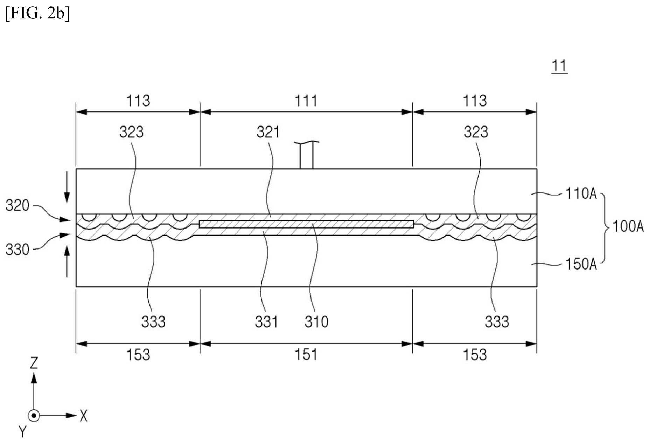

FIGS. 2a and 2b are cross-sectional views illustrating a tape attaching apparatus 11 according to exemplary embodiments of the present disclosure. In the following, the tape attaching apparatus 11 illustrated in FIGS. 2a and 2b will be described, with particular emphasis on differences from the tape attaching apparatus 10 described with reference to FIGS. 1a and 1b.

Referring to FIGS. 2a and 2b, in the tape holder 100A of the tape attaching apparatus 11, the support surface 123A of the peripheral part 113 of the first holder 110A may include a plurality of first protruding parts 131, and the support surface 163A of the peripheral part 153 of the second holder 150A may include a plurality of grooves 173. Each of the plurality of first protruding parts 131 may be aligned to a corresponding one groove 173 of the plurality of grooves 173 in a vertical direction (e.g., in the Z direction). In this case, during the tape attachment process, the adhesive pressure between the peripheral part 323 of the first tape 320 and the peripheral part 333 of the second tape 330 may be enhanced, thereby strengthening the adhesion between the first tape 320 and the second tape 330.

### (Third embodiment)

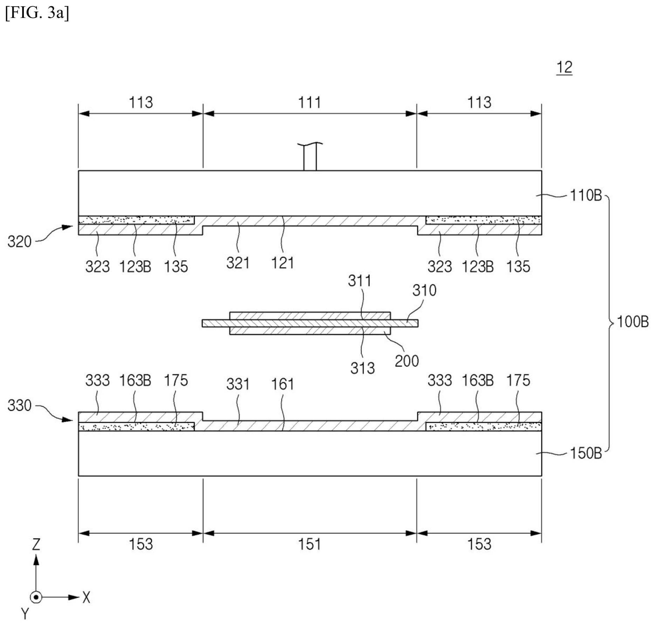

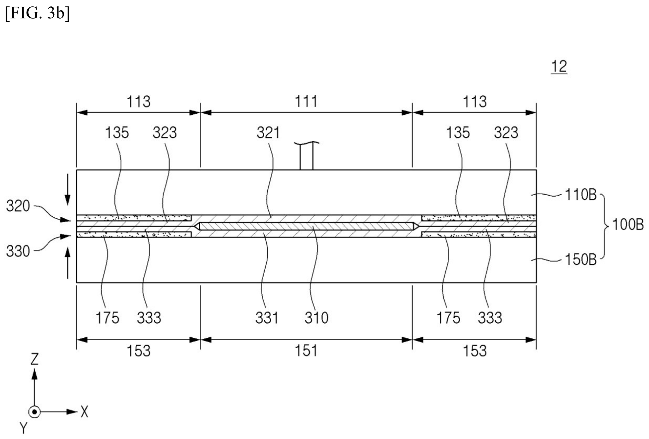

FIGS. 3a and 3b are cross-sectional views illustrating a tape attaching apparatus 12 according to exemplary embodiments of the present disclosure. In the following, the tape attaching apparatus 12 illustrated in FIGS. 3a and 3b will be described, with particular emphasis on its differences from the tape attaching apparatus 10 described with reference to FIGS. 1a and 1b.

Referring to FIGS. 3a and 3b, in the tape holder 100B of the tape attaching apparatus 12, at least one among the peripheral part 113 of the first holder 110B and the peripheral part 153 of the second holder 150B may include a foam pad. The foam pad may have pores therein. The foam pad may be compressible, and upon application of an external force, the thickness of the foam pad may decrease from an initial thickness, and upon release of the external force, the thickness of the foam pad may be restored to the initial thickness.

In exemplary embodiments, the peripheral part 113 of the first holder 110B may include a first foam pad 135 that contacts the peripheral pat 323 of the first tape 320. For example, the first holder 110B may include a body including a center part and a peripheral part, and a first foam pad 135 connected to the peripheral part of the body of the first holder 110B. When a vacuum pressure is applied to a suction hole in the body of the first holder 110B, the first tape 320 may be attached to the first foam pad 135 by a suction force provided through the first foam pad 135. The support surface 123B of the peripheral part 113 of the first holder 110B may include a surface of the first foam pad 135.

In exemplary embodiments, the peripheral part 153 of the second holder 150B may include a second foam pad 175 that contacts the peripheral part 333 of the second tape 330. For example, the second holder 150B may include a body including a center part and a peripheral part, and a second foam pad 175 connected to the peripheral part of the body of the second holder 150B. When a vacuum pressure is applied to a suction hole in the body of the second holder 150B, the second tape 330 may be attached to the second foam pad 175 by the suction force provided through the second foam pad 175. The support surface 163B of the peripheral part 153 of the second holder 150B may include a surface of the second foam pad 175.

During the tape attachment process, the adhesive pressure between the peripheral part 323 of the first tape 320 and the peripheral part 333 of the second tape 330 sandwiched between the first foam pad 135 and the second foam pad 175 may be enhanced, thereby strengthening the adhesion between the first tape 320 and the second tape 330.

### (Fourth embodiment)

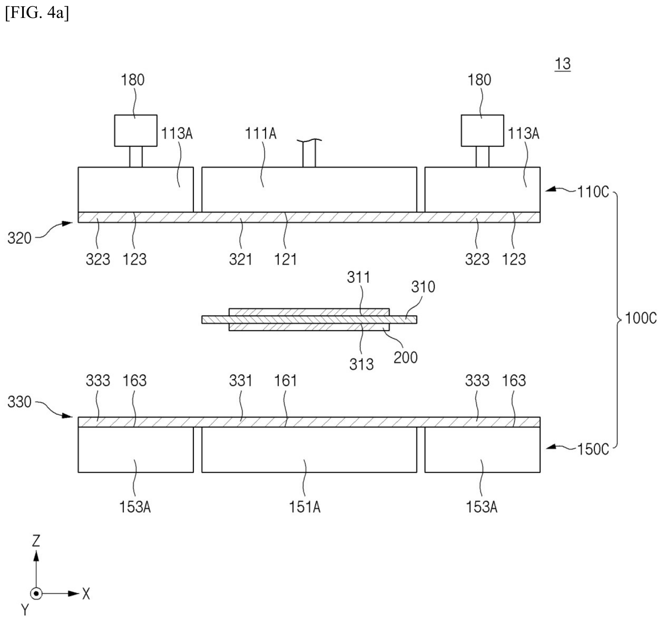

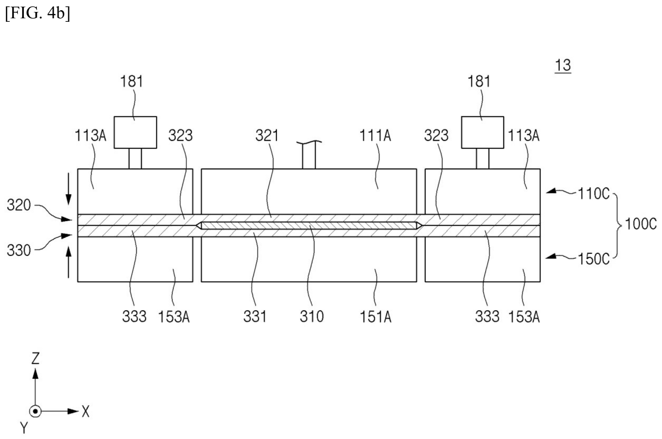

FIGS. 4a and 4b are cross-sectional views illustrating a tape attaching apparatus 13 according to exemplary embodiments of the present disclosure. In the following, the tape attaching apparatus 13 illustrated in FIGS. 4a and 4b will be described, with particular emphasis on differences from the tape attaching apparatus 10 described with reference to FIGS. 1a and 1b.

Referring to FIGS. 4a and 4b, in the tape holder 100C of the tape attaching apparatus 13, the first holder 110C may include an independently movable separated center part 111A and a peripheral part 113A, and the second holder 150C may include an independently movable separated center part 151A and a peripheral part 153A. The center part 111A and the peripheral part 113A of the first holder 110C may be referred to as the first center block and the first peripheral block, respectively, and the center part 151A and the peripheral part 153A of the second holder 150C may be referred to as the second center block and the second peripheral block, respectively.

The tape attaching apparatus 13 may include a pressing device 180 configured to adjust the adhesive pressure between the peripheral part 113A of the first holder 110C and the peripheral part 153A of the second holder 150C, between the peripheral part 323 of the first tape 320 and the peripheral part 333 of the second tape 330. The pressing device 180 may be connected to the peripheral part 113A of the first holder 110C and configured to press the peripheral part 113A of the first holder 110C toward a support surface of the second holder 150C.

During the tape attachment process, the pressing device 180 may press the peripheral part 113A of the first holder 110C toward the second holder 150C to increase the adhesive pressure between the peripheral part 323 of the first tape 320 and the peripheral part 333 of the second tape 330, thereby increasing the adhesion between the first tape 320 and the second tape 330.

### (Fifth embodiment)

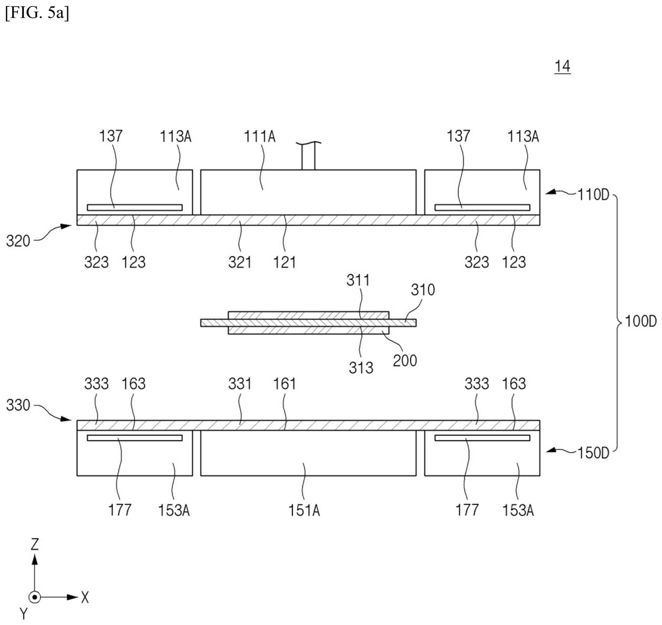

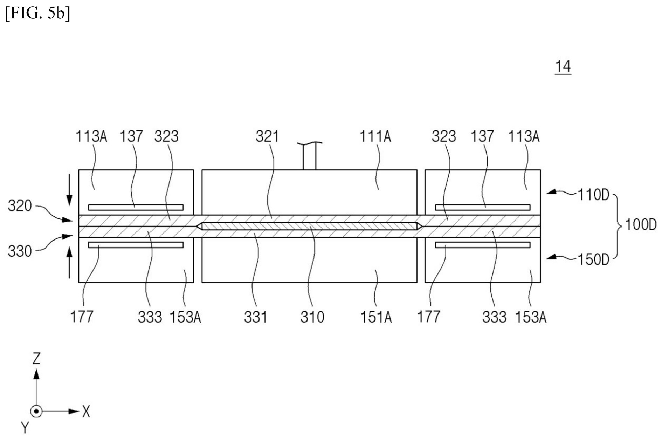

FIGS. 5a and 5b are cross-sectional views illustrating a tape attaching apparatus 14 according to exemplary embodiments of the present disclosure. In the following, the tape attaching apparatus 14 illustrated in FIGS. 5a and 5b will be described, with particular emphasis on differences from the tape attaching apparatus 13 described with reference to FIGS. 4a and 4b.

Referring to FIGS. 5a and 5b, in the tape holder 100D of the tape attaching apparatus 14, at least one among the peripheral part 113A of the first holder 110D and the peripheral part 153A of the second holder 150D may include a heater. For example, the heater may be an electrical resistance type heater and may include heating electrodes configured to be heated by a heating power source applied from an external heating power source.

In exemplary embodiments, the peripheral part 113A of the first holder 110D may include a first heater 137. For example, the first heater 137 may be embedded within the peripheral part 113A of the first holder 110D.

In exemplary embodiments, the peripheral part 153A of the second holder 150D may include a second heater 177. For example, the second heater 177 may be embedded within the peripheral part 153A of the second holder 150D.

During the tape attachment process, at least one among the first heater 137 and the second heater 177 may apply heat to the peripheral part 323 of the first tape 320 and the peripheral part 333 of the second tape 330 to enhance the adhesion between the first tape 320 and the second tape 330.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present disclosure.

## Claims

1. A tape attaching apparatus configured to attach a first tape to a first side of a workpiece and a second tape to a second side of the workpiece, comprising:
a tape holder comprising a first holder supporting the first tape and a second holder supporting the second tape, the tape holder configured to attach a center part of the first tape and a center part of the second tape to the workpiece and to attach a peripheral part of the first tape to a peripheral part of the second tape, wherein
the first holder comprises a center part supporting the center part of the first tape and a peripheral part supporting the peripheral part of the first tape,
the second holder comprises a center part supporting the center part of the second tape and a peripheral part supporting the peripheral part of the second tape, and
a support surface of the peripheral part of the first holder comprises a portion protruding from a support surface of the center part of the first holder.

2. The tape attaching apparatus of claim 1, wherein
the support surface of the center part of the first holder has a greater flatness than the support surface of the peripheral part of the first holder.

3. The tape attaching apparatus of claim 1, wherein
a support surface of the peripheral part of the second holder comprises a portion protruding from a support surface of the center part of the second holder.

4. The tape attaching apparatus of claim 3, wherein
the support surface of the center part of the second holder has a greater flatness than the support surface of the peripheral part of the second holder.

5. The tape attaching apparatus of claim 1, wherein
the support surface of the peripheral part of the first holder comprises a plurality of first protruding parts, and
the support surface of the peripheral part of the second holder comprises a plurality of second protruding parts.

6. The tape attaching apparatus of claim 5, wherein
the plurality of first protruding parts is not aligned with the plurality of second protruding parts in a vertical direction.

7. The tape attaching apparatus of claim 1, wherein
the support surface of the peripheral part of the first holder comprises a plurality of first protruding parts,
a support surface of the peripheral part of the second holder comprises a plurality of grooves, and
each of the plurality of first protruding parts is aligned with a corresponding groove among the plurality of grooves in a vertical direction.

8. The tape attaching apparatus of claim 1, wherein
the peripheral part of the first holder comprises a first foam pad in contact with the first tape.

9. The tape attaching apparatus of claim 8, wherein
the peripheral part of the second holder comprises a second foam pad in contact with the second tape.

10. The tape attaching apparatus of claim 1, wherein
at least one among the peripheral part of the first holder and the peripheral part of the second holder comprises a heater.

11. A tape attaching apparatus configured to attach a first tape to a first side of a workpiece and a second tape to a second side of the workpiece, comprising:
a tape holder comprising a first holder supporting the first tape and a second holder supporting the second tape, the tape holder configured to attach a center part of the first tape and a center part of the second tape to the workpiece and to attach a peripheral part of the first tape to a peripheral part of the second tape, wherein
the first holder comprises a first center block supporting the center part of the first tape and a first peripheral block supporting the peripheral part of the first tape, and
the first center block and the first peripheral block are configured to move independently.

12. The tape attaching apparatus of claim 11, further comprising:
a first pressing device configured to press the first peripheral block toward the second holder.

13. The tape attaching apparatus of claim 11, wherein
the first peripheral block comprises a first heater.

14. The tape attaching apparatus of claim 11, wherein
the second holder comprises a second center block supporting the center part of the second tape and a second peripheral block supporting the peripheral part of the second tape, and
the second center block and the second peripheral block are configured to move independently.

15. The tape attaching apparatus of claim 14, wherein
the first peripheral block comprises a first heater, and
the second peripheral block comprises a second heater.
